# EUROPÄISCHE PATENTSCHRIFT

(11) **EP 0 891 271 B1**
(45) Veröffentlichungstag und Bekanntmachung des Hinweises auf die Patenterteilung: **16.05.2001**
(21) Anmeldenummer: 98905320.2
(22) Anmeldetag: 20.01.1998
(51) Int. Cl.: B60R 25/02, E05B 47/06, E05B 47/02

(54) **ELEKTROMAGNETISCH BETÄTIGTES SCHLOSS**
ELECTROMAGNETICALLY ACTUATED LOCK
SERRURE A COMMANDE ELECTROMAGNETIQUE

(30) Priorität: 04.02.1997 DE 19704062
(43) Veröffentlichungstag der Anmeldung: 20.01.1999
(73) Patentinhaber: DaimlerChrysler AG, 70567 Stuttgart (DE)
(72) Erfinder: ZIMMER, Markus, D-63263 Neu-Isenburg (DE); UHLER, Rainer, D-74889 Sinsheim (DE); SCHÖNER, Hans-Peter, D-64397 Modautal (DE)
(74) Vertreter: Maute, Hans-Jürgen, Dipl.-Ing.
(86) Internationale Anmeldenummer: EP9800286
(87) Internationale Veröffentlichungsnummer: WO9833686

(56) Entgegenhaltungen:
- EP-A- 0 185 817
- DE-A- 3 505 971
- DE-C- 4 422 435
- GB-A- 2 193 697
- US-A- 4 250 976
- US-A- 4 784 415

## Beschreibung

Die Erfindung betrifft ein elektromagnetisches Schloß nach dem Oberbegriff des Anspruchs 1

Mit der künftigen Einführung elektronischer Schlüssel, beispielsweise für Fahrzeuge. wobei der Benutzer lediglich einen kodierten Schlüssel ohne mechanische Funktion (Schlüsselbart) besitzt, ist es nötig, auch die rein mechanische Schloßfunktion durch eine elektrisch gesteuerte Vorrichtung zu ersetzen.

Aus der Patentschrift US-A 4,784,415 ist bekannt, daß in einem elektromagnetischen Schloß ein bewegliches Teil vorgesehen ist, welches gegen Verschieben mittels eines Sperrbolzens arretierbar ist, wobei der Sperrbolzen in eine Aussparung des beweglichen Teils eingreift. Dabei greift mindestens ein Sicherungsstift in den Sperrbolzen ein, und der Sicherungsstift entriegelt beim Vorhandensein der Zugangsberechtigung den Sperrbolzen. Bei Stromausfall sichern bestrombare Spulen, bei denen Sicherungsstift und Sperrbolzen jeweils den Anker bilden, den entriegelten bzw. verriegelten Zustand des Sperrbolzens, wobei auch mehrere Sicherungsstifte vorgesehen sein können.

Aus De-A1 35 05 971 ist ein Schlüssel zum Betätigen des elektromagnetischen Schlosses bekannt, der Kontaktstifte bzw. -brücken enthält, mittels derer das Schloß bei vollständig eingestecktem Schlüssel in Betrieb genommen wird.

Der Erfindung liegt die Aufgabe zugrunde, ein Schlüssel-Schloß-System zu entwickeln, das aufgrund des Gefahrenpotentials bei einer Fehlfunktion erhöhten Sicherheitsanforderungen genügt.

Diese Aufgabe wird durch die im Kennzeichen des Anspruchs 1 aufgeführten Merkmale gelöst. Ausgestaltungen der Erfindung sind in den Unteransprüchen enthalten.

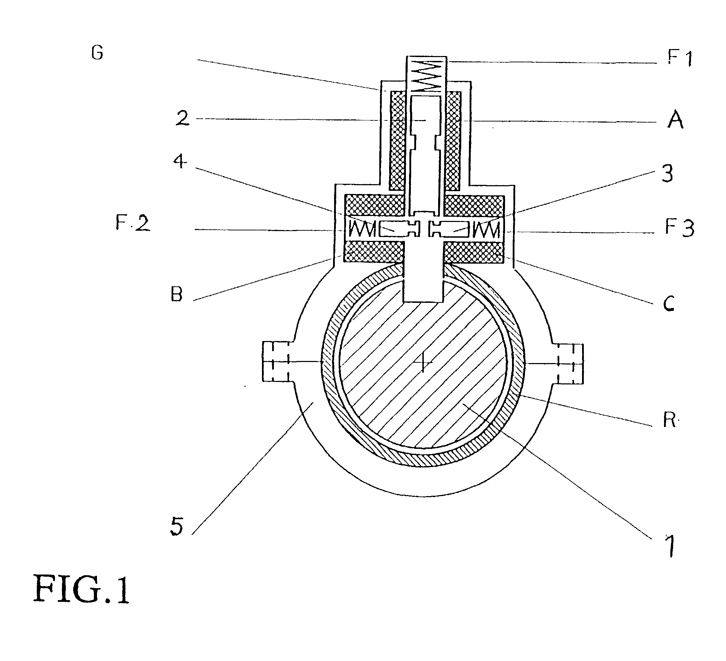

Fig. 1 zeigt eine Anordnung, die dem Arbeitsprinzip von Magnetventilen ähnlich ist. Das System weist drei Spulen A-C mit den zugehörigen Ankern 2, 3, 4 und Druckfedern F1. F2, F3 auf, die in einem Gehäuse (G) zusammengefaßt sind, sowie eine Aufnahme 5 (Schelle) zur sicheren Befestigung beispielsweise am Mantelrohr für eine Lenkspindel 1 eines Kraftfahrzeugs.

Im verriegelten Zustand greift ein Sperrbolzen 2 in eine Aussparung in Fig. 1 dargestellten Welle bzw. Lenkspindel 1. Der Sperrbolzen 2 wird zusätzlich durch Sicherungsstifte 3 und 4 gehalten. Die Welle oder Lenkspindel ist somit gegen Verdrehen gesichert. Analog hierzu kann die erfindungsgemäße Vorrichtung auch zur Arretierung eines in Längsrichtung beweglichen Teils 1 benutzt werden.

Zum Entriegeln werden zunächst die Spulen B und C bestromt, um die Sicherungsstifte zu lösen. Danach wird durch Bestromung der Spule A der Sperrbolzen 2 aus der Lenkspindel 1 gezogen und die Lenkung freigegeben. Die Spulen B und C werden abgeschaltet, so daß die Sicherungsstifte 3 und 4 in ihre Ruheposition zurückkehren und ein ungewolltes Einfallen des Sperrbolzens 2 in die Lenkspindel 1 verhindern. Sobald der Strom durch Spule A abgeschaltet wird, verriegelt der Sperrbolzen zusätzlich die beiden Sicherungsstifte. Auf diese Weise ist hier eine dreifache Sicherheit gegen unbeabsichtigtes Blockieren der Lenkung realisiert.

Zum Verriegeln der Lenkspindel 1 müssen nun nacheinander die Spule A und die Spulen B und C erregt werden. Danach wird der Strom zunächst in Spule A und anschließend in den Spulen B und C abgeschaltet. Die Lenkung befindet sich nach Einrasten des Sperrbolzens 2 in die Aussparung der Lenkspindel 1 im verriegelten Zustand.

Die Lage der Sicherungsstifte und des Sperrbolzens können durch Messung der Induktivitäten von der zugehörigen Steuerelektronik permanent überwacht werden.

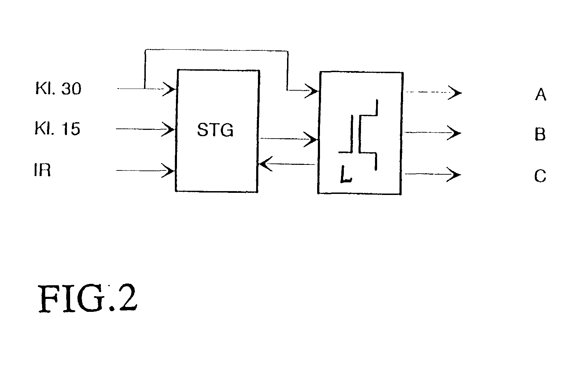

Fig. 2 zeigt die dazugehörende elektrische Schaltung. Die Spulen A-C werden über eine Leistungsendstufe L gesteuert, die ihrerseits die elektrischen Werte der Spulen detektiert und an die Ablaufsteuerung STG weiterleitet. Die Steuersignale werden von ihr in Abhängigkeit von der Stellung der Sicherungsstifte sowie des Sperrbolzens einerseits und der Anforderungen aus dem Fahrzeug andererseits generiert. Als Eingangssignale sind die Pegel der Dauerstromversorgung an K1.30, der Meldung "Zündung ein" an K1.15 und der Status der Infrarot-Schließanlage IR vorgesehen.

Für eine erhöhte Sicherheit ist es von Vorteil, mehr als zwei Sicherheitsstifte vorzusehen.

## Patentansprüche

1. Elektromagnetisch betätigbares Schloß mit einem beweglichen Teil (1), welches gegen Verdrehen oder Verschieben mittels eines Sperrbolzens (2) arretiert ist, der in eine Aussparung des beweglichen Teils (1) eingreift, wobei in den Sperrbolzen (2) Sicherungsstifte (3, 4) eingreifen, die beim Vorhandensein der Zugangsberechtigung den Sperrbolzen (2) entriegeln, wobei die Sicherungsstifte (3, 4) und der Sperrbolzen (2) elektromagnetisch betätigt sind, wobei die Elektromagnete aus bestrombaren Spulen (A, B, C) mit Sicherungsstiften (3, 4) oder Sperrbolzen (2) als Anker bestehen, und wobei der Sperrbolzen (2) durch die Sicherungsstifte (3, 4) in zwei Stellungen arretiert ist,
**dadurch gekennzeichnet,**
daß der Sperrbolzen (2) in der Entriegelungsstellung bei stromloser Spule (A) des Sperrbolzens (2) seinerseits zusätzlich die beiden Sicherungsstifte verriegelt.

2. Schloß nach Anspruch 1,
dadurch gekennzeichnet,
daß eine Steuerelektronik mit einer Ablaufsteuerung (STG) zum permanenten Überwachen der Lage des Sperrbolzens (2) und der Sicherungsstifte (3, 4) durch Messung der Induktivitäten der Spulen (A, B, C) vorgesehen ist.

3. Schloß nach Anspruch 1 oder 2,
dadurch gekennzeichnet,
daß eine elektronische "Und"-Verknüpfung in einer Ablaufsteuerung (STG) für Kraftfahrzeuge vorgesehen ist, wobei bei eingeschalteter Zündung die Stromzufuhr für die Spulen (B, C) der Sicherungsstifte (3, 4) sperrbar ist.

4. Schloß nach Anspruch 1 oder 2,
dadurch gekennzeichnet,
daß mehr als zwei Sicherungsstifte (3, 4) vorgesehen sind.

5. Schloß nach Anspruch 1 oder 2,
dadurch gekennzeichnet,
daß ein in das Schloß einführbarer Schlüssel vorgesehen ist, der Kontaktbrücken zum Bestromen der Spulen (A, B, C) enthält.

## Claims

1. Electromagnetically actuable lock with a movable member (1) which is locked against rotation or sliding by means of a blocking bolt (2), which engages in a recess of the movable member (1), wherein securing pins (3, 4), which unlock the blocking bolt (2) in the presence of the access authorisation, engage in the blocking bolt (2), wherein the securing pins (3, 4) and the blocking bolt (2) are electromagnetically actuated, wherein the electromagnets consist of current-suppliable coils (A, B, C) with the securing pins (3, 4) or blocking bolt (2) as armature, and wherein the blocking bolt (2) is lockable by the securing pins (3, 4) in two settings, characterised in that the blocking bolt (2) in the unlocking setting with current-free coil (A) of the blocking bolt (2) in its turn additionally locks the two securing pins.

2. Lock according to claim 1, characterised in that a control electronic system with a sequence control (STG) for permanent monitoring of the position of the blocking bolt (2) and the securing pins (3, 4) by measurement of the inductances of the coils (A, B, C) is provided.

3. Lock according to claim 1 or 2, characterised in that an electronic AND logical linking is provided in a sequence control (STG) for motor vehicles, wherein the current feed for the coils (B, C) of the securing pins (3, 4) is blockable when the ignition is switched on.

4. Lock according to claim 1 or 2, characterised in that more than two securing pins (3, 4) are provided.

5. Lock according to claim 1 or 2, characterised in that a key is provided, which is insertable into the lock and which comprises contact bridges for current supply of the coils (A, B, C).

## Revendications

1. Serrure actionnable électromagnétiquement avec une partie mobile (1) qui est arrêtée à l'encontre d'une rotation ou d'un déplacement au moyen d'un boulon d'arrêt (2) qui s'engage dans un évidemment de la partie mobile (1), où des goupilles de sécurité (3, 4) s'engagent dans le boulon d'arrêt (2) qui, lors de l'existence de l'autorisation d'accès, déverrouillent le boulon d'arrêt (2), où les goupilles de sécurité (3, 4) et le boulon d'arrêt (2) sont actionnés d'une manière électromagnétique, où les électro-aimants sont constitués de bobines aptes à être alimentées en courant (A, B, C) avec des goupilles de sécurité (3, 4) ou boulon d'arrêt (2) comme induit et où le boulon d'arrêt (2) est arrêté par les goupilles de sécurité (3, 4) dans deux positions, caractérisée en ce que le boulon d'arrêt (2), dans la position de déverrouillage lors d'une bobine sans courant (A) du boulon d'arrêt (2) verrouille additionnellement les deux goupilles de sécurité.

2. Serrure selon la revendication 1, caractérisée en ce qu'il est prévu une électronique de commande avec une commande de déroulement (STG) pour la surveillance permanente de la position du boulon d'arrêt (2) et des goupilles de sécurité (3, 4) par la mesure des inductances des bobines (A, B, C).

3. Serrure selon la revendication 1 ou 2, caractérisée en ce qu'il est prévu une opération ET électronique dans une commande de déroulement (STG) pour des véhicules automobiles, où lors d'un allumage en service, l'amenée du courant aux bobines (B, C) des goupilles de sécurité (3, 4) peut être bloquée.

4. Serrure selon la revendication 1 ou 2, caractérisée en ce que sont prévues plus que deux goupilles de sécurité (3, 4).

5. Serrure selon l'une des revendications 1 ou 2, caractérisée en ce qu'il est prévu une clef insérable dans la serrure qui contient des ponts de contact pour l'amenée du courant aux bobines (A, B, C).
